# EUROPEAN PATENT APPLICATION

(11) **EP 2 071 655 A1**
(43) Date of publication of application: **17.06.2009**
(21) Application number: 07828669.7
(22) Date of filing: 28.09.2007
(51) Int. Cl.: H01M 8/02, H01M 8/10

(54) **MEMBRANE ELECTRODE ASSEMBLY AND METHOD FOR PRODUCING THE SAME**

(30) Priority: 29.09.2006 JP 2006266563
(71) Applicant: Fujifilm Corporation, Tokyo 106-0031 (JP)
(72) Inventor: MATSUMOTO, Kazuhiko, Minami-ashigara-shi, Kanagawa; 250-0193 (JP)
(74) Representative: HOFFMANN EITLE
(86) International application number: PCT/JP2007/068927
(87) International publication number: WO 2008/041622

(57) **Abstract**

Provided is a membrane and electrode assembly excellent in adhesion between the electrolyte membrane and the catalyst layer. A membrane and electrode assembly comprising an electrolyte membrane and an electrode comprising a catalyst layer on at least one surface of the electrolyte membrane, wherein the electrolyte membrane contacts the catalyst layer via an ion-exchangeable polymer obtained by subjecting polymerizable monomers to surface graft polymerization.

## Description

### BACKGROUND OF THE INVENTION

The present invention relates to a membrane and electrode assembly and a method for producing the same. Particularly, the present invention relates to a membrane and electrode assembly applicable to the fuel cell.

Recently, fuel cells which operate and afford high output densities even at ambient temperatures have been attracting attentions as power sources for electric vehicles and stationary type power sources in line with social demands and trends based on the energy and environmental problems. In principle, a product produced in an electrode reaction is water in the fuel cells, so that they belong to a clean power generation system, which causes almost no adverse influence upon the global environment. As the fuel cells, there are the polymer electrolyte membrane fuel cells (PEFC), the phosphoric-acid fuel cells (PAFC), the alkaline fuel cells (AFC), the solid oxide fuel cells (SOFC), the molten carbonate fuel cells (MCFC), etc. Among them, the polymer electrolyte membrane fuel cells have been expected as power sources for electric vehicles, because they operate and offer high output densities at relatively low temperatures.

The polymer electrolyte membrane fuel cell is generally constructed in such a structure that a membrane and electrode assembly (hereinafter also referred to as "MEA") is sandwiched between separators. For example, the MEA is constructed such that an electrolyte membrane is sandwiched between a pair of catalyst layers and electroconductive layers (gas diffusion layers).

The catalyst layer is porous formed by a mixture of an electrolyte and an electroconductive material on which an active metal catalyst is carried. Meanwhile, as the electroconductive layer, one in which a carbon water-repellent layer comprising carbon particles and a water-repellent agent is formed on a surface of a gas diffusion substrate such as a carbon cloth is used.

In the polymer electrolyte membrane fuel cell, an electrochemical reaction proceeds as follows. First, hydrogen contained in a fuel gas fed to the catalyst layer on a side of an anode electrode is divided into protons and electrons through oxidation with the active metal catalyst as shown in the following formula (1). Next, the protons produced reach the cathode electrode-side catalyst layer through a proton-conducting material contained in the anode electrode-side catalyst layer and further the electrolyte membrane contacting the anode electrode-side catalyst layer. On the other hand, the electrons produced in the anode electrode-side catalyst layer reach the cathode electrode-side catalyst layer through the electroconductive material composing the anode electrode-side catalyst layer, the electroconductive layer contacting the side of the anode electrode-side catalyst layer which is opposite to the side of the solid polymer electrolyte membrane, the separator and an external circuit. Then, the protons and the electrons which reached the cathode electrode-side catalyst layer produce water through a reaction with oxygen contained in an oxidant gas fed to the cathode electrode-side as shown in the following formula (2) via the active metal catalyst. In the fuel cell, electricity can be taken outside through the above-mentioned electrochemical reaction.

Anode electrode-side catalyst layer: H₂ → 2H + +2e⁻ (1)

Cathode electrode side-catalyst layer: 1/2O₂ + 2H+ + 2e⁻ → H2O (2)

Therefore, the electrolyte membrane is required to have high proton conductivity and a function as a separator sandwiched between the electrodes.

A process for producing the polymer electrolyte membrane fuel cell is described in, for example, Patent Document 1. The electrolyte membrane and the two electrodes are generally contacted together by hot press in which the electrolyte membrane is heated and pressed. For example, the electrolyte membrane and the two electrodes are contacted together such that after the electrolyte membrane is sandwiched between the two electrodes and in turn they are inserted between two press plates, wherein the temperature is raised from 125 °C to 130 °C, and the hot press is carried out for about 60 seconds under a pressure of about 10MPa.

Patent Document 2 describes that adhesion between the electrolyte membrane and the anode electrode is improved by providing a polymeric electrolyte intermediate layer between the anode electrode and the electrolyte membrane. However, adhesion can be improved when an electrolyte binder in the anode electrode is the same material as that of the electrolyte membrane, whereas contacting is insufficient when the electrolyte binder is a different material from that of the electrolyte membrane. This is because Patent Document 2 merely pursue improvement of adhesion, and the contacting force therein is insufficient in the first place.
Patent Document 3 describes a method for improving adhesion between the electrolyte membrane and the anode electrode by roughening the interface between the electrolyte membrane and the catalyst layer through modifying a surface of the electrolyte membrane. However, according to this method, when the surface of the electrolyte membrane is roughened, resultant non-uniform degradation of the electrolyte membrane readily occurs, so that gas leak possibly occurs due to pin holes. In addition, the contacting force is weak and insufficient.

Patent Document 4 discloses an assembly using an electrolyte membrane obtained by laminating plural polymer membranes comprising a surface-modified membrane. Specifically, as the surface-modified membrane, those formed by treating the surface of the electrolyte membrane through imide crosslinking, fluorination, etc. are cited. By modifying the surface of the membrane, thehe surface-modified membrane is strengthened, so that the mechanical strength of the electrolyte membrane can be improved even in a small film thickness, and furthermore gas leak can be suppressed without occurrence of defects such as pin holes. However, it is described that since there is a defect that the adhesion between the catalyst layer and the electrolyte membrane is poor, the modified surface of the electrolyte membrane is used in a face being in no contact with the catalyst layer. That is, the above method is not useful for improving the adhesion between the electrolyte membrane and the catalyst layer.

Patent Document 5 describes that graft polymerization is taken place inside a membrane by applying a high energy beam thereon. However, it has neither description nor suggestion on the graft polymerization of the surface. It has neither description nor suggest on the adhesion between a catalyst layer and an electrolyte membrane.
Patent Document 6 discloses a method for improving the adhesion between a catalyst layer and an electrolyte membrane. However the method causes unevenness on the surface of the electrolyte membrane, and therefore, it is unfavorable from the standpoint of strength.
Namely, although it has been desired that the adhesion between the electrolyte membrane and the catalyst layer is improved in the membrane and electrode assembly, there is no membrane and electrode assembly which has improved adhesion, good durability, etc. at present.

Patent Document 1: JP-A 5-135785
Patent Document 2: JP-A 2000-195527
Patent Document 3: JP-A 5-258756
Patent Document 4: JP-A 2003-272663
Patent Document 5: JP-A 2005-135681
Patent Document 6: JP-A 2004-185930

### DICSLOSE OF THE INVENTION

### THE SUBJECT TO BE SOLVED BY THE INVENTION

It is an object of the present invention to provide a membrane and electrode assembly which can solve such inconveniences and afford excellent adhesion between an electrolyte membrane and a catalyst layer.

### MEANS FOR SOLVING THE SUBJECT

Under these circumstances, the present inventors made further investigations with respect to the following points.
Perfluoroalkylene sulfonic acid polymer compounds (for example, Nafion (registered trademark) manufactured by du Pont de Nemours and Company), which have been heretofore widely used in the membrane and electrode assemblies, have more excellent proton conductivity since it is sulfonated, and chemical resistance serving as fluororesins, but they are too expensive. Therefore, the inventors made investigations to avoid such a problem, too.

Thus, the inventors investigated, as an inexpensive electrolyte membrane in place of the perfluoroalkylene sulfonic acid polymer compound, to make up a membrane and electrode assembly, for example, by using a sulfonated product of a hydrocarbon polymer compound containing no fluorine or having a reduced content of fluorine in the molecular structure. This point had been also conventionally investigated. As the hydrocarbon polymer compound, a hydrocarbon polymer is known, which has a main chain to which plural benzene rings such as polyetherether ketones, polybenzimidazoles or the like are bonded via a bivalent organic group or directly. Further, as the hydrocarbon polymer, U.S.P. 5,403,675 describes a rigid polyphenylene compound.

However, it was found out that if the electrolyte membrane, particularly, the electrolyte membrane made of the hydrocarbon polymer, is integrally sandwiched between catalyst layers, it was difficult to obtain sufficient adhesion between the electrolyte membrane and the catalyst layer. Furthermore, sufficient power generating performance cannot be obtained in the case of the membrane and electrode assembly having low adhesion between the electrolyte membrane and the catalyst layer, because transfer of protons between the electrolyte membrane and the catalyst layer is interrupted.

In view of this, the present inventors have made strenuous investigations, and consequently found out that the above problems can be solved by the following measures.
(1) A membrane and electrode assembly comprising an electrolyte membrane and an electrode comprising a catalyst layer on at least one surface of the electrolyte membrane, wherein the electrolyte membrane contacts the catalyst layer via an ion-exchangeable polymer obtained by subjecting polymerizable monomers to surface graft polymerization.
(2) A membrane and electrode assembly comprising an electrolyte membrane and an electrode comprising a catalyst layer on at least one surface of the electrolyte membrane, wherein the electrolyte membrane contacts the catalyst layer via a surface graft polymerization layer comprising an ion-exchangeable polymer obtained by subjecting polymerizable monomers to surface graft polymerization.
(3) The membrane and electrode assembly according to (1) or (2), wherein the polymerizable monomer is an ion-exchangeable monomer.
(4) The membrane and electrode assembly according to any one of (1) to (3),
   wherein the catalyst layer contains a binder having the same structure as the ion-exchangeable polymer.
(5) The membrane and electrode assembly according to any one of (1) to (4),
   wherein the electrolyte membrane comprises an aromatic hydrocarbons polymer and the ion-exchangeable polymer is a fluorinated polymer.
(6) The membrane and electrode assembly according to any one of (2) to (5),
   wherein the surface graft polymerization layer has a thickness of D.1 µm to 1.0 µm.
(7) The membrane and electrode assembly according to any one of (1) to (6),
   wherein the surface graft polymerization is carried out by low energy electron beam with an acceleration voltage of not more than 50KV, oxygen gas plasma, argon gas plasma, or ultraviolet ray.
(8) A fuel cell comprising the membrane and electrode assembly according to any one of (1) to (7).
(9) A method for producing a membrane and electrode assembly, comprising subjecting polymerizable monomers to surface graft polymerization on an electrolyte membrane and forming a catalyst layer thereon.

### EFFECT OF THE INVENTION

There is obtained the electrode and membrane assembly which can be bonded to the catalyst layer at a low temperature causing less damages of the electrolyte membrane, and possesses good adhesion between the electrode membrane and the catalyst layer. Further, the fuel cell having high output stability has come to be easily obtained.

### BRIEF DESCRIPTION OF THE DRAWINGS

[Fig. 1] Fig. 1 is a schematic cross-sectional view showing an example of a constitution of an electrode and membrane assembly.
[Fig. 2] Fig. 2 is a schematic cross-sectional view showing an example of a structure of a fuel cell.

### EXPLANATIONS OF LETTERS OR NUMERALS

- 10: Membrane and electrode assembly
- 11: Electrolyte membrane
- 12: Anode electrode
- 12a: Anode side porous conductive sheet
- 12b: Anode side catalyst layer
- 13: Cathode electode
- 13a: Cathode side porous conductive sheet
- 13b: Cathode side catalyst layer
- 14: Gasket
- 15: Anode side gas inlet and outlet
- 16: Cathode side gas inlet and outlet
- 17: Collector

### BEST MODE FOR CARRYING OUT THE INVENTION

In the following, the present invention will be explained in detail. In the present specification, "--- to ---" is used to mean that figures given before and after "to" are included as a lower limit and an upper limit, respectively.

### <Surface grafting>

In the present invention, the surface graft polymerization is performed on the electrolyte membrane. The graft polymerization is a method in which active seeds are given on polymer chains, and another polymerizable monomer which begins to be polymerized by the active seeds is further polymerized to synthesize a graft polymer. Particularly when the polymer to which the active seeds are given forms a solid surface, the method is called a surface graft polymerization.
The surface in the surface graft polymerization means, for example, an area within not more than 5% of the film thickness from the surface of the electrolyte membrane.

As the surface graft polymerization to realize the present invention, any of known surface graft polymerization methods described in literatures can be used. For example, "New Polymer Experiments", Vol. 10, edited by Society of Polymer Science, Japan and published in 1994 by Kyouritsu Shuppan Co., Ltd., p135 describes a photografting polymerization method and a plasma irradiation graft polymerization method as the surface graft polymerization method. Further, "Adsorption Technology Handbook", NTS Inc., edited by Takeuchi, published on February in 1999, p203 and p695 describe radiation-irradiated graft polymerization methods with a Y beam, an electron beam or the like.
As a concrete photografting polymerization method, methods described in JP-A 63-92658, JP-A 10-296895 and JP-A 11-119413 can be used.

Besides these methods, as the measures to produce a layer in which a surface graft polymer having terminals of polymer chains directly chemically bonded is formed (hereinafter referred to as "surface graft polymerized layer" in the present specification), the layer can be formed by introducing reactive functional groups such as trialkoxysilyl groups, isocyanate groups, amino groups, hydroxyl groups, carboxyl groups or the like into the terminals of the polymers and subjecting the reactive functional groups and the functional groups existing on the surface of the substrate to a coupling reaction.

### <<Introduction and polymerization of monomer>>

The surface graft polymerized layer in the present invention comprises an ion-exchangeable polymer. However, it is not excluded that a component other than the ion-exchangeable polymer is contained in such a scope as not deviated from the purpose of the present invention. The surface graft polymerized layer in the present invention is obtained by radical polymerizing a polymerizable monomer (preferably an ion-exchangeable monomer) on the surface of the electrolyte membrane. Here, the ion-exchangeable monomer is a monomer having an ion-exchangeable functional group. The preferable examples of the polymer include polymers possessing a fluorine-containing polymer unit as a skeleton and having one or more of any one or plural kinds of sulfonic acid groups, carboxylic acid groups, phosphoric acid groups and phosphonic acid groups.
On the other hand, as the polymer constituting the electrolyte membrane, which will be mentioned later in detail, a copolymer between tetrafluoroethylene and a fluorovinyl compound given below is preferable.

CF₂=CF-(OCF₂CFₓ)ₘ-O_{q}-(CF₂)ₙ-A

wherein m is an integer of 0 to 3, n is an integer of 0 to 12, q is 0 or 1, X is F or CF₃, and A is a sulfonic acid-based functional group, a carboxylic acid-based functional group or a phosphoric acid-based functional group.
If m is 2 or more, -(OCF₂CFx)ₛ- may be the same or different.

Further, as the surface graft polymerization layer in the present invention, various kinds of aromatic phenol compounds may be cation polymerized on the surface of the electrolyte membrane. The examples of preferable monomers to be used herein include styrene, substituted styrenes, acrylic acid, substituted acrylate esters, and substituted acrylamides.

The surface graft polymerization is preferably carried out by an electron beam having a low energy with an acceleration voltage of not more than 50KV, an oxygen gas plasma, an argon gas plasma or ultraviolet rays.
Particularly when radical polymerizable monomers are graft polymerized, irradiation of radiation rays is favorably used. The acceleration voltage of the radiation rays needs to be set in such an energy range as produces activated points in the surface of the electrolyte membrane only, and is preferably 1 to 50kV, and is more preferably 5 to 20kV. In the present invention, the radical reaction-active points can be effectively produced only in the surface of the electrolyte membrane by irradiating the electron beam as the radiation ray upon the polymer electrolyte membrane. When a high-energy electron beam or radiation rays such as Y rays passing a fluororesin are employed, if such a fluororesin is used, active points are formed inside the electrolyte membrane. Therefore, the ion-exchangeable monomer or the like cannot be graft polymerized at the surface, so that the purpose of the present invention cannot be realized.

Furthermore, the irradiation dose of the electron beam is preferably 1 to 50kGy, more preferably 5 to 10kGy. Not less than 1kGy and not more than 10kGy are preferable, because if it is set at not less than 1kGy, such a graft polymerization ratio to degree that characteristics of the functional groups more effectively work tends to be obtained, whereas if it is set at not more than 10kGy, reduction in strength of the electrolyte membrane tends to be suppressed.
The temperature at the time of the irradiation is preferably not more than room temperature. The temperature is preferably set at not more than room temperature, because in this case, the temperature at the time of irradiating the electron beam is not too high, and radicals are unlikely to be extinguished.

In addition, the electron beam is preferably irradiated in an atmosphere of an inert gas such as helium, nitrogen or argon gas, and the concentration of oxygen in the gas is preferably not more than 100ppm, and more preferably not more than 50ppm, but the irradiation needs not necessarily be performed in an absence of oxygen.

On the other hand, JP2001-348439 proposes that a polymer electrolyte membrane having a crosslinked structure can be obtained by preliminarily irradiating a radiation beam upon the electrolyte membrane at a temperature of not less than the melting point, so that the strength of the membrane against the radiation beam is improved. In the electrolyte membrane to be used in the present invention, it is possible to form an electrolyte membrane having a crosslinked structure by preliminarily irradiating a radiation beam to the electrolyte membrane at a temperature of not less than the melting point, to generate radicals to the electrolyte membrane through irradiation of the electron beam at not more than room temperature (20 to 40 °C) as mentioned above, preferably at 20 to 40 °C, and to subjecting exchangeable monomers to surface graft polymerization.

As the radical polymerizable monomer to be subjected surface graft polymerization to the electrolyte membrane used in the present invention by irradiating the electron beam thereon, any of the ion-exchangeable monomer or a polymerizable monomer to which ion-exchangeable functional groups are introducible can be used with no particular limitation. Hydrocarbon monomers (particularly, aromatic hydrocarbon monomers), fluorinated monomers (particularly, fluorine-containing hydrocarbon monomers), etc. can be used. In particular, according to the present invention, the electrolyte membrane is preferably constituted by a composition obtained by subjecting a hydrocarbon monomer (particularly, an aromatic hydrocarbon monomer) to graft polymerization, wherein a fluorinated monomer (particularly, a fluorine-containing hydrocarbon monomer) is subjected to surface graft polymerization.

As the ion-exchangeable functional group, a phenolic hydroxyl group, a carboxylic acid group, an amine group, a sulfonic acid group, etc. are cited. In addition, since acyloxy groups, ester groups, acid imide groups, etc. can be quantitatively converted to ion-exchangeable functional groups such as phenolic hydroxyl groups, sulfonic acid groups, etc. through hydrolysis, monomers having such groups can be also used.

Specific examples of the hydrocarbon monomers having the ion-exchangeable functional groups incluse acrylic acid, methacrylic acid, maleic acid, fumaric acid, hydroxyoxy styrene, acyloxy styrene, vinyl sulfonic acid, styrene carboxylic acid, styrene alkyl sulfonic acid, etc.

Meanwhile, when used us a monomer having no ion-exchangeable functional group, but having an ion-exchangeable functional group capable of being introduced, the ion-exchangeable functional groups can be introduced by sulfonation or the like through utilizing a chemical reaction after the graft polymerization of the monomer having no iran-exchangeable group. As the monomer having no ion-exchangeable functional group, but having an ion-exchangeable functional group capable of being introduced, styrene, α-methylstyrene, vinyl toluene, hydroxystyrene, etc. can be used. A sulfon group can be introduced into the above ion-exchangeable functional group monomer capable of being introduced by reacting a sulfonating agent such as sulfuric acid or fuming sulfuric acid with the monomer.

Further, if necessary, a crosslinkable monomer such as a monomer having plural vinyl groups such as divinyl benzenes can be mixed in an amount of 0.1 to 15mol% with respect to the ion-exchangeable monomer or the like to be used in the present invention.

Furthermore, as the fluorine-containing hydrocarbon monomer, a fluorine-containing hydrocarbon monomer having the same ion-exchangeable functional group as in the above-mentioned hydrocarbon monomer or a fluorine-containing hydrocarbon monomer having no ion-exchangeable functional group, but having an ion-exchangeable functional group capable of being introduced is preferably used. In this carbon fluoride monomer, as a functional group which can be converted to an ion-exchangeable functional group through hydrolysis, -SO₂F, -SO₂NH₂, -SO₂NH₄, -COOH, -CN, -COF, -COOR (R is an alkyl group having 1 to 10 carbon atoms), etc. are cited. These functional groups are favorable, because they can easily offer a sulfon group or a carboxylic acid group through hydrolysis.

The following compounds can be specifically cited as the fluorine-containing hydrocarbon monomers by way of example.
Trifluoroethylene sulfonyl halide CF₂=CFSO₂X (X: -F or -Cl),
trifluorovinyl ether sulfonyl halide CF₂-CF-O-SO₂X (X: -F or -Cl),
perfluoroally fluorosulfide CF₂=CFCF₂-O-SO₂F,
perfluoro vinylether sulfonyl fluoride CF₂=CF-O-CF₂CF(CF₃)O(CF₂)₂SO₂F,
trifluorostyrene CF₂-CFC₆H₅,
trifluoro acrylate CF₂-CFCOOR (R: -CH₃ or -C(CH₃)₃).

Examples of the method for subjecting the ion-exchangeable monomer or the like to surface graft polymerization to the electrolyte membrane in the present invention include a method in which a radical polymerizable ion-exchangeable monomer is subjected to graft polymerization to one surface of the electrolyte membrane by the irradiation with an electron beam and then another radical-polymerizable ion-exchangeable monomer is subjected to graft polymerization to the resultant by irradiating an electron beam to the other face of the electrolyte membrane. The irradiation of the electron beam is preferably carried out on the both surfaces at the above acceleration voltage, at irradiation dose, etc.

At this time, the amount of the radical-polymerizable ion-exchangeable monomer to be subjected to graft polymerization each of the surfaces of the electrolyte membrane which was irradiated with the radiation beams is used ordinarily at 1 to 100,000 parts by mass, particularly preferably at 10 to 2,000 parts by mass with respect to 100 parts by mass of the fluororesin. If the amount of the radical-polymerizable ion-exchangeable monomer is too small, contacting may be insufficient, whereas if it is too large, the radical-polymerizable ion-exchangeable monomer or the like may not be effectively used.

When the radical-polymerizable ion-exchangeable monomer is to be subjected to graft polymerization to the fluorinated resin, a polymerization initiator such as azo bisisobutylonitrile or the like may be appropriately used in such an amount as range as not diverting the purpose of the present invention.

Further, a solvent may be used at the time of the graft reaction in the present invention. As the solvent, preferred is one which uniformly dissolves the ion-exchangeable monomer. For example, use may be made of ketones such as acetone, methyl ethyl ketone, etc., esters such as ethyl acetate, butyl acetate, etc., alcohols such as methyl alcohol, ethyl alcohol, propyl alcohol, butyl alcohol, etc., ethers such as tetrahydrofuran, dioxane, etc., aromatic hydrocarbons such as N, N-dimethylformamide, N,N-dimethylacetamide, benzene, toluene, etc., aliphatic or alicyclic hydrocarbons such as n-hepthane, n-hexane, cyclohexane, etc., or mixed solvents of any of them.

In the present invention, the concentration of oxygen in the reaction atmosphere is preferably set to 0.05 to 5% (volume%, same in the following) when the graft polymerization is carried out. It is considered that oxygen in the reaction atmosphere is converted to carbonyl radicals or peroxy radicals through a reaction with radicals inside the system, which functions to suppress a further reaction. If the concentration of oxygen is less than 0.05%, the radical-polymerizable monomer may be polymerized alone to form a gel which is not dissolved in the solvent, so that the starting materials are wasted and it takes a long time to remove the gel, whereas if the concentration of oxygen exceeds 5%, the grafting rate may decrease. The concentration of oxygen is preferably 0.1 to 3%, and more preferably 0.1 to 1%. As a gas other than oxygen, an inert gas such as nitrogen or argon is used.

The reacting conditions of the above graft polymerization are that the temperature is ordinarily 0 to 100 °C, particularly preferably 40 to 80 °C, and the reaction time is ordinarily 1 to 40 hours, particularly preferably 4 to 20 hours.

### <<Electrolyte membrane>>

As the electrolyte membrane to be used in the present invention, publicly known electrolytes formed in the form of membranes and publicly known electrolyte membranes can be widely adopted.
Of those, a fluoropolymer can be preferably used because of excellent chemical stability. Specifically, citation is made of perfluoro sulfonic acid membranes having high proton conductivity and known in the commercial names of Nafion (registered trademark, manufactured by du Pont de Nemours and Company), Aciplex (registered trademark, manufactured by Asahi Kasei Corporation) and Flemion (registered trademark, manufactured by Asahi Glass Co., Ltd.).

Further, in the present invention, a sulfoalkylated aromatic hydrocarbon polymer having aromatic rings in a main chain can be used as the electrolyte. Particularly, a sulfoalkylated aromatic hydrocarbon polymer having sulfoalkyl groups of the following chemical formula (1) introduced in side chains is preferably used as the electrolyte.
As specific examples of the sulfoalkylated aromatic hydrocarbon polymers, citation is made of engineering plastics such as polyetherether ketones (PEEK) developed by ICI Corporation, England in 1977 and having a structural unit represented by the following chemical formula (2), semicrystalline polyaryl ether ketones (PAEK) developed by BASF, Germany, polyether ketones (PEK) marketed by Sumitomo Chemical Co., Ltd. and having a structural unit represented by the following chemical formula (3), polyketones (PK) marketed by Teijin Amoco Engineering Plastics Ltd., polyether sulfones (PES) marketed by Sumitomo Chemical Co., Ltd., Teijin Amoco Engineering Plastics Ltd., Mitsui Chemicals, Incorporation, etc. and having a structural unit represented by the following chemical formula (4), polysulfones (PSU) marketed by Solvay Advanced Polymers, LLC and having a structural unit represented by the following chemical formula (5), linear or crosslinking polyphenylene sulfides (PPS) marketed by Toray Industries, Inc., Dainippon Chemical Industries, Ltd., Toprene, Idemitsu Kosan Co., Ltd., Kureha Corporation, etc. and having a structural unit represented by the following chemical formula (6), modified polyphenylene ethers (PPE) marketed by Asahi Kasei Corporation, GE Plastics, Japan, Mitsubishi Engineering-Plastics Corporation and Sumitomo Chemical Co., Ltd. and having a structural unit represented by the following chemical formula (7), etc. as well as aromatic hydrocarbon polymers in which the sulfoalkyl groups represented by the following chemical formula (1) are introduced into side chains of their polymer alloys. Of those, the main chain structures are preferably PEEK, PEAK, PEK, PK, PPS, PES and PSU from the standpoint of resistance to oxidant degradation of the main chains.

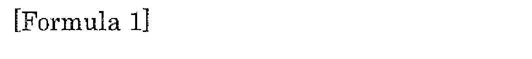

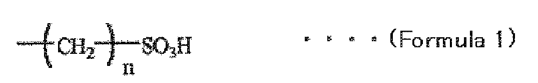

wherein n is 1, 2, 3, 4, 5, or 6. 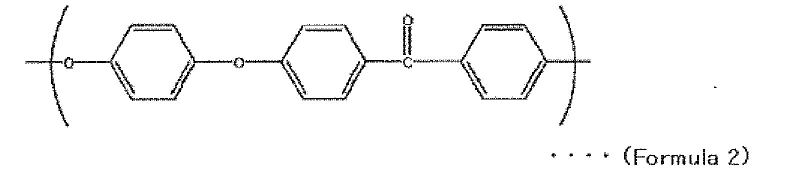 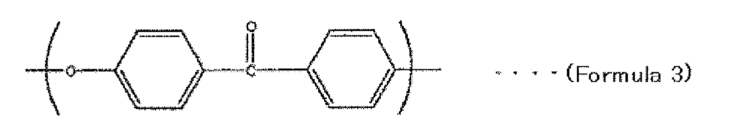 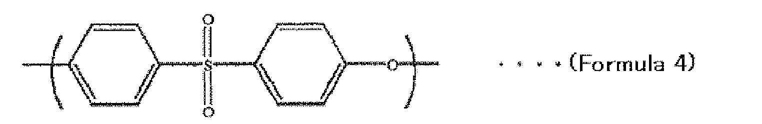 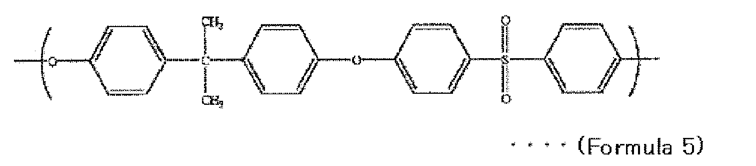 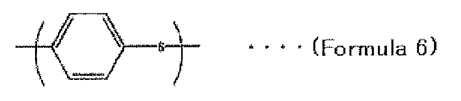 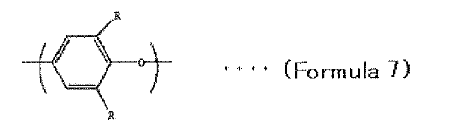 wherein R is lower alkyl group such as methyl group, ethyl group and the like, or phenyl group.

Furthermore, in the present invention, as the electrolyte, use can be made of a sulfonic acid type polystyrene-graft-ethylene tetrafluoroethylene copolymer (ETFE) disclosed in JP-A 9-102322 and comprising a main chain formed by copolymerization of florocarbon-based vinyl monomer and a hydrocarbon-based vinyl monomer and hydrocarbon-based side chains having sulfonic acid groups, a sulfonic acid type polystyrene-graft-ETFE disclosed in dP-A 9-102322, a sulfonic acid type poly(trifluorostyrene)-graft-ETFE disclosed in U.S.P. 4,012,303, U.S.P.4,605,685, etc. This sulfonic acid type poly(trifluorostyrene)-graft-ETFE is an electrolyte formed by graft-polymerizing α, β, β-trifluorostyrene to a membrane made of a copolymer of fluorocarbon vinyl monomer and a hydrocarbon-based vinyl monomer and introducing sulfonic acid groups thereinto.

An equivalent weight of the ion-exchangeable groups of the electrolyte to be used in the present invention is preferably 250 to 2500g/mol, more preferably 300 to 1500g/mol, and still more preferably 350 to 1000g/mol. Not more than 2500g/mol and not less than 250g/mol are both preferable, because if the equivalent weight of the ion-exchangeable groups is set at not more than 2500g/mol, the output performance is unlikely to decrease, whereas if it is set at not less than 250g/mol, the water proof of the electrolyte is unlikely to decrease.

The equivalent weight of the ion-exchangeable groups referred to in the present invention means the molecular weight of the polymer as the electrolyte per unit mole of the introduced functional groups having ion exchangeability. The smaller the value is, the higher the content of the ion-exchangeable functional groups is. The equivalent weight of the ion-exchangeable groups can be measured by a ¹H-NMR spectroscopy, an elementary analysis, an acid-base titration described in JP-B 1-52866, a non-aqueous acid-base titration (a normal liquid is a benzene/methanol solution of potassium methoxide) or the like.

The electrolyte is ordinarily used in the state of the electrolyte membrane in the fuel cell. Although no limitation is posed upon a membrane-forming method, a method for forming a membrane from a solution state (solution casting method), a method for forming a membrane from a molten state (melt pressing method or melt extruding method) or the like is possible. Specifically, in the former method, a membrane can be formed, for example, by flow casting and coating a solution containing an ion-exchangeable polymer as an electrolyte on a glass plate and removing the solvent. No limitation is posed upon the solvent to be used in the formation of the membrane, so long as it can dissolve the ion-exchangeable polymer as the electrolyte and can be removed later. Use can be favorably made of non-proton polar solvents such as N,N- dimethyl formamide, N,N-dimethyl acetamide, N-methyl-2-pyrrolidone, dimethyl sulfoxide, etc., alkylene glycol monoalkyl ethers such as ethylene glycol monomethyl ether, ethylene glycol monoethyl ether, propylene glycol monomethyl ether, propylene glycol monoethyl ether, etc., halogen-based solvents such as dichloromethane, trichloroethane, etc., alcohols such as isopropyl alcohol, tert-butyl alcohol, etc.

Although no particular limitation is posed upon the thickness of the electrolyte membrane used in the present invention, it is preferably 10 to 300µm, more preferably 1 to 200µm, and still more preferably 30 to 100µm. Not less than 10µm and not more than 300µm are preferably, because if the thickness is set at not less than 10µm, the electrolyte membrane has a practical strength, whereas if it is not more than 300µm, the resistance of the membrane is reduced, that is, it is likely that the power generating performance is further improved. In the case of the solution casting method, the thickness of the electrolyte membrane can be controlled by adjusting the concentration of the solution of the ion-exchangeable polymer as the electrolyte or adjusting the thickness of the coated thickness on the substrate. In case that the membrane is formed from the molten state, the thickness of the electrolyte membrane can be controlled by stretching the membrane, which is obtained in a given thickness by the melt pressing method, the melt extruding method or the like, at a given magnification.

### <<Other components of the electrolyte membrane>>

When the electrolyte membrane to be used in the present invention is produced, additives to be used in ordinary polymers, such as a plasticizer, a stabilizer, a mold-releasing agent, etc. can be used in such amounts as not contrary to the purpose of the present invention.

To the solid electrolyte of the invention, according to need, an oxidation inhibitor, a fiber, a fine particle, a water-absorbing agent, a plasticizer, a compatibilizing agent or the like may be added in order to enhance film properties. The content of these additives is preferably in a range of 1to 30% by mass relative to the total amount of the solid electrolyte.

Preferable examples of the oxidation inhibitor include (hindered) phenol-based, mono- or di-valent sulfur-based, tri- or penta-phosphorous-based, benzopbenane-based, benzotriazole-based, hindered amine-based, cyanoacrylate-based, salicylate-based, and oxalic acid anilide-based compounds. Specifically, compounds described in JP-A-8-53614, JP-A-10-101873, JP-A-11-114430 and JP-A-2003-151346 can be mentioned.

Preferable examples of the fiber include perfluorocabon fiber, cellulose fiber, glass fiber, polyethylene fiber and the like. Specifically, fibers described in JP-A-10-312815, JP-A-2000-231928, JP-A-2001-307545 JP-A-2003-317748, JP-A-2004-63430 and JP-A-2004-107461 can be mentioned.

Preferable examples of the fine particle include fine particles composed of silica, alumina, titanium oxide, zirconium oxide and the like. Specifically, those described in JP-A-6-111834, JP-A-2003-178777, and JP-A-2004-217921 can be mentioned.

Preferable examples of the water-absorbing agent (hydrophilic material) include cross-linked polyacrylates, starch-acrylates, poval, polyacrylonitrile, carboxymethyl cellulose, polyvinylpyrrolidone, polyglycol dialkylether, polyglycol dialkylester, silica gel, synthesized zeolite, alumina gel, titania gel, zirconia gel, and yttria gel. Specifically, water-absorbing agents described in JP-A-7-135003, JP-A-8-20716 and JP-A-9-251857 can be mentioned.

Preferable examples of the plasticizer include phosphoric acid ester-based compounds, phthalic acid ester-based compounds, aliphatic monobasic acid ester-based compounds, aliphatic dibasic acid ester-based compounds, dihydric alcohol ester-based compounds, oxyacid ester-based compounds, chlorinated paraffins, alkylnaphthalene-based compounds, sulfone alkylamide -based compounds, oligo ethers, cabonates, and aromatic nitriles. Specifically, those described in JP-A-2003-197030, JP-A-2003-288916, and JP-A-2003-317539 can be mentioned.

Further, the solid electrolyte of the invention may be incorporated with various polymer compounds for the purpose of (1) enhancing mechanical strength of the film, or (2) enhancing acid concentration in the film.
(1) For the purpose of enhancing mechanical strength, such polymer compound is suitable that has molecular weight of around 10,000 to 1,000,000 and good compatibility with the solid electrolyte of the invention. For example, perfluorinated polymer, polystyrene, polyethylene glycol, polyoxetane, poly(meth)acrylate, polyether ketone, and polyether sulfone. Two or more kinds of the polymers may be used. Preferable content is in a range of 1to 30% by mass relative to the whole.
   A compatibilizing agent has a boiling point or sublimation point of preferably 250°C or more, and more preferably 300°C or more.
(2) For the purpose of increasing acid concentration, such polymer compound is preferable that has a proton acid site such as perfluorocarbon sulfonic acid polymers as represented by Nafion (registered trademark), poly(meth)acrylates having a phosphoric acid group in a side chain, or sulfonated heat resistant aromatic polymers such as sulfonated polyether ether ketone, sulfonated polyether sulfone, sulfonated polysulfone or sulfonated polybenzimidazole, which is preferably contained in a range of 1 to 30% by mass relative to the whole.

As the solid electrolyte of the invention, those having following performances are preferable.
The proton conductivity is preferably 0.005 S/cm or more, and more preferably 0.01 S/cm, for example, at 25°C at 95%RH.
As to strength, for example, the tension strength is preferably 10MPa or more, more preferably 20MPa or more.

The solid electrolyte of the invention preferably has a stable water absorption coefficient and moisture content. Further, it preferably has a substantially negligible solubility to alcohols, water and mixed solvents of these. In addition, it preferably has a substantially negligible weight loss and figure change when dipped in the above-described solvent.
When it is formed in a film shape, it preferably has a higher ion conductivity in the direction from front face to rear face compared with those in other directions.
Heat-resistant temperature of the solid electrolyte of the invention is preferably 200°C or more, more preferably 250°C or more, and further preferably 300°C or more. The heat-resistant temperature can be defined, for example, as a time period when weight loss reaches 5% by heating the film at a rate of 1 °C/min. The weight loss is calculated while excluding evaporation quantity of water and the like.

Further, when the solid electrolyte of the invention is used for a fuel cell, an active metal catalyst that facilitates the oxidation-reduction reaction of an anode fuel and a cathode fuel may be added. As the result, fuels permeating into the solid electrolyte are consumed in the solid electrolyte without reaching the other electrode, whereby crossover can be prevented. An active metal catalyst to be used is suitable for the active metal catalyst as described hereinafter, and preferably platinum or an alloy based on platinum.

### <<Fuel cell>>

Next, a membrane and electrode assembly of the present invention and a fuel cell employing the membrane and electrode assembly.

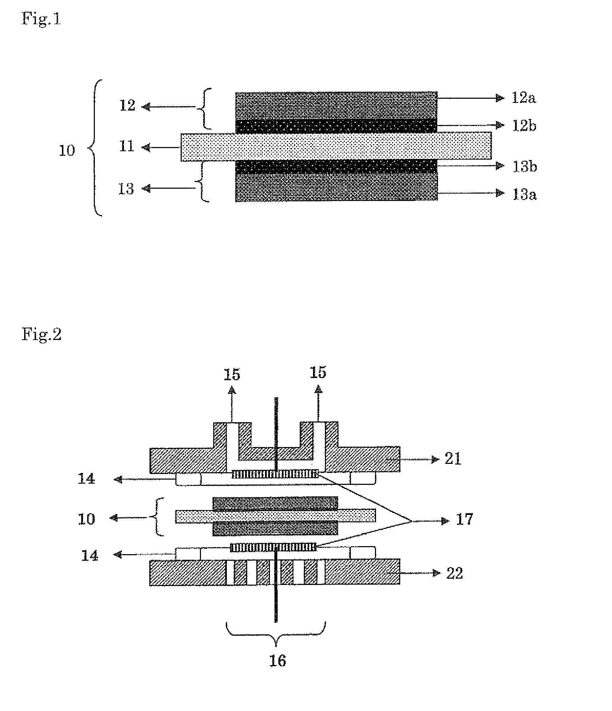

Fig. 1 shows an example of schematic cross-sectional view of the membrane and electrode assembly of the invention. The MEA 10 includes a film-shaped solid electrolyte 11, and an anode electrode 12 and a cathode electrode 13 facing to each other while holding the solid electrolyte 11 therebetween.
The anode electrode 12 and the cathode electrode 13 are composed of, for example, conductive layers 12a, 13a, and catalyst layers 12b, 13b. The catalyst layers 12b, 13b are composed of a dispersed substance prepared by dispersing a conductive material carrying an active metal catalyst into a proton conductive material. In order to bring the catalyst layers 12b, 13b into close contact with the solid electrolyte 11, such method is generally used that the porous conductive sheets 12a, 13a coated with catalyst layers 12b, 13b are pressure-bonded to the solid electrolyte 11 by a hot press method (preferably 120 to 250°C, 2 to 100 kg/cm²), or the catalyst layers 12b, 13b coated on a suitable support are transferred and pressure-bonded to the solid electrolyte 11, which is then sandwiched between the porous conductive sheets 12a, 13a.

Fig. 2 shows an example of a fuel cell structure. The fuel cell includes the MEA 10 and collectors 17 comprising a pair of separators holding the MEA 10 therebetween, and gaskets 14. To the collector 17 on the anode side, an anode side opening 15 is arranged, and to the collector 17 on the cathode side, a cathode side opening 16 is arranged. From the anode side opening 15, a gas fuel such as hydrogen or alcohols (methanol etc.) or a liquid fuel such as an aqueous alcohol solution is supplied, and from the cathode side opening 16, an oxidant gas such as oxygen gas or air is supplied.

The catalyst layer to be used in the membrane and electrode assembly 10 is constituted by an electroconductive material on which an active metal catalyst is carried. The catalyst layer may contain a water repellent agent and a binder, if necessary. Further, a layer (electroconductive layer) composed of the electroconductive material on which no catalyst is carried and further the water-repellent agent and the binder contained if necessary, may be formed on an outer side of the catalyst layer. In the catalyst layer, the catalyst in which the active metal catalyst is carried on the electroconductive material is used. The active metal catalyst may be any metal, so long as it accelerates an oxidation reaction of hydrogen and a reducing reaction of oxygen. For example, platinum, gold, silver, palladium, iridium, rhodium, ruthenium, iron, cobalt, nickel, chromium, tungsten, manganese, vanadium and alloys of any of them can be cited. Among these catalysts, gold is particularly used in many cases.
The particle sizes of the active metal catalyst ordinarily used are in a range of 2 to 10nm. The smaller the particle sizes, the larger the surface area per unit mass. Thus, the smaller particle sizes are advantageous because of increased activity. If the particle sizes are too small, however, it tends to be difficult to disperse the particles without being flocculated. Thus, not less than 2nm is preferable.

Activated polarization in a hydrogen-oxygen system fuel cell is greater for a cathodic side (air pole) compared with an anodic side (hydrogen pole). This is because reaction at the cathodic side (reduction of oxygen) is slower compared with that at the anodic side. In order to enhance activity of the oxygen pole, various platinum-based bimetals such as Pt-Cr, Pt-Ni, Pt-Co, Pt-Cu, Pt-Fe can be used. In a fuel cell which employs a reformed gas from fossil fuels containing carbon monoxide as anode fuel, suppression of catalyst poisoning by CO is important. For this purpose, platinum-based bimetals such as Pt-Ru, Pt-Fe, Pt-Ni, Pt-Co and Pt-Mo, and trimetals such as Pt-Ru-Mo, Pt-Ru-W, Pt-Ru-Co, Pt-Ru-Fe, Pt-Ru-Ni, Pt-Ru-Cu, Pt-Ru-Sn and Pt-Ru-Au can be used.

As the electroconductive material on which the active metal catalyst is to be carried, any material suffices, so long as it is an electroconductive material. For example, various metals, carbonaceous materials, etc. are cited. As the carbonaceous material, carbon blacks such as furnace black, channel black, acetylene black, etc-, activated carbon, graphite, etc. are recited, for example. They are used singly or in a mixed state. In particular, acetylene black, Vulcan XC-72, Ketzen black, carbon nano horns (CNH) and carbon nano tubes (CNT) are preferably used.

The functions of the catalyst layer are: (1) to transport the fuel to the active metal, (2) to provide a field for oxidation reaction (anodic side) and reduction reaction (cathodic side) of the fuel, (3) to transmit electrons generated by oxidation-reduction to the current collector, and (4) to transport protons generated by the reaction to the solid electrolyte. In order to accomplish (1), the catalyst layer must be porous to allow the liquid and gas fuels to permeate deeply. (2) is borne by the aforementioned active metal catalyst, and (3) is borne by the also aforementioned carbon material. In order to fulfill the function of (4), the catalyst layer is mixed with a proton conductive material.

As to the proton conductive material of the catalyst layer, a solid having a proton-donating group can be used without any restriction, but there can be mentioned a film of polymer compounds having an acid residue used for the solid electrolyte, perfluorocarbon sulfonic acid polymers as represented by Nafion (registered trademark), poly(meth)acrylates having a phosphorous group in a side-chain, heat-resistant aromatic polymers such as sulfonated polyetherether ketone, sulfonated polyether ketone, sulfonated polyether sulfone, sulfonated polysulfone and sulfonated polybenzimidazole, sulfonated polystylene, sulfonated polyoxetane, sulfonated polyimide, sulfonated polyphenylene sulufide, sulfonated polyphenylene oxide and sulfonated polyphenylene. Specifically, there can be mentioned those described in JP-A-2002-110174, JP-A-2002-105200, JP-A-2004-10677, JP-A-2003-132908, JP-A-2004-179154, JP-A-2004-175997, JP-A-2004-247182, JP-A-2003-147074, JP-A-2004-234931, JP-A-2002-289222 and JP-A-2003-208816. The proton conductive material used in the catalyst layer is preferably the same as the ion-exchangeable polymer obtained by the graft polymerization in the present invention from the view point of adhesion.

The catalyst layer preferably contains an water repellant additionally As to the water repellant, fluorinated carbon, fluorine-containing resins having water-repellent property is preferable, and those excellent in heat resistance and oxidation resistance is more preferable. For example, polytetrafluoroethylene, tetrafluoroethylene-perfluoroalkylvinyl ether copolymer and tetrafluoroethylene-hexafluoropropylene copolymer can be mentioned.

Suitable use amount of the active metal falls within 0.03 to 10 mg/cm² from the viewpoint of battery output power and economical efficiency. Suitable amount of the carbon material that carries the active metal is 1 to 10 times the mass of the active metal. Suitable amount of the proton conductive material is 0.1 to 0.7 time the mass of the active metal-carrying carbon.

The conductive layer is also called an electrode base material, a permeable layer or a liner substance, and bears roles of function of current collection and prevention of degradation of gas permeation caused by accumulation of water. Usually, carbon paper or carbon cloth is used, and one having been subjected to polytetrafluoroethylene (PTFE) treatment for the purpose of water repellent finish can also be used.

Methods for carrying the active metal catalyst include a heat reduction method, a sputtering method, a pulse laser deposition method, a vacuum evaporation method and the like (for example, WO 2002/054514 etc.).

Next, a method for producing an anode electrode and a cathode electrode will be explained. A dispersion liquid (catalyst layer-coating liquid) in which a proton-conductive material represented by Nafion dissolved in a solvent and an electroconductive material carrying an active metal catalyst are mixed is dispersed.
Preferable examples of the solvent of the dispersion liquid include heterocyclic compounds (such as 3-methyl-2-oxazolidinone and N-methylpyrrolidone), cyclic ethers (such as dioxane and tetrahydrofuran), chain ethers (such as diethyl ether, ethylene glycol dialkyl ether, propylene glycol dialkyl ether, polyethylene glycol dialkyl ether and polypropylene glycol dialkyl ether), alcohols (such as methanol, ethanol, isopropanol, ethylene glycol monoalkyl ether, propylene glycol monoalkyl ether, polyethylene glycol monoalkyl ether and polypropylene glycol monoalkyl ether), polyhydric alcohols (ethylene glycol, propylene glycol, polyethylene glycol, polypropylene glycol and glycerin), nitryl compounds (such as acetonitryl, glutarodinitrile, methoxyacetonitryl, propyonitryl and benzonitryl), nonpolar solvents (such as toluene and xylene), chlorine-containing solvents (such as methylene chloride and ethylene chloride), amides (such as N,N-dimethylformamide, N,N-dimethylacetamide and acetamide) and water. Among these, heterocyclic compounds, alcohols, polyhydric alcohols and amides are preferably used.

The method for dispersing may be carried out by stirring, and also may be ultrasonic dispersion, a ball mill and the like. The resulting dispersion liquid may be coated by using a coating method such as a curtain coating, extrusion coating, roll coating, spin coating, dip coating, bar coating, spray coating, slide coating and print coating methods.

Coating of the dispersion liquid will be described. In a coating process, a film may be formed by extrusion molding, or casting or coating of the above-described dispersion liquid. A support in this case is not particularly restricted, and preferable examples thereof include a glass substrate, a metal substrate, a polymer film, a reflection board and the like. Examples of the polymer film include a film of cellulose-based polymers such as triacetyl cellulose (TAC), ester-based polymers such as polyethylene terephthalate (PET) and polyethylene naphthalate (PEN), fluorine-containing polymers such as polytrifluoroethylene (PTFE), and polyimide. As the coating method, known methods may be used, and the examples of the method include a curtain coating method, an extrusion coating method, a roll coating method, a spin coating method, a dip coating method, a bar coating method, a spray coating method, a slide coating method and a print coating method. Particularly, when a conductive porous material (carbon paper, carbon cloth) is used as the support, the electrode having a catalyst layer and a conductive layer is formed.

These operations may be carried out by a film-forming machine that uses rolls such as calendar rolls or cast rolls, a T die, and may be carried out by press molding by a press machine. Further, a stretching process may be added to control the film thickness or improve film characteristics. As another method, a method, in which an electrode catalyst having been formed in a paste shape as described above is directly sprayed to the solid electrolyte film with an ordinary sprayer to form the catalyst layer, can be also used. Control of the spray time and the spray volume makes formation of a uniform electrode catalyst layer possible.

Drying temperature in the coating process relates to the drying speed, and can be selected in accordance with properties of the material. It is preferably -20°C to 150°C, more preferable 20°C to 120°C, and further preferably 50°C to 100°C. A shorter drying time is preferable from the viewpoint of productivity, however, a too short time tends to easily generate such defects as bubbles or surface irregularity. Therefore, drying time of 1 minute to 48 hours is preferable, 5 minutes to 10 hours is more preferable, and 10 minutes to 5 hours is further preferable. Control of humidity is also important, and relative humidity (RH) is preferably 25 to 100%, and more preferably 50 to 95%.

The coating liquid (dispersion liquid) in the coating process preferably contains a small amount of metal ions, and in particular, it contains a small amount of transition metal ions, especially an iron, nickel and cobalt ions. The content of transition metal ions is preferably 500 ppm or less, and more preferably 100 ppm or less. Therefore, a solvent used in the aforementioned processes is preferably the solvent which contains these ions in a small amount, too.

The thickness of a catalyst layer possessed by the membrane and electrode assembly according to the present invention is preferably 5 to 200µm, and more preferably 10 to 100µm.

As the method for manufacturing the membrane and electrode assembly, for example, the MEA is manufactured by contacting together the electrolyte membrane and the catalyst layer and the conductive layer and the like. The manufacturing method is not particularly limited, and known methods may be used.

For manufacturing the MEA, following 4 methods are preferable.
(1) Proton conductive material coating method : wherein a catalyst paste (ink) containing an active metal-carrying carbon, a proton conductive substance and a solvent as fundamental components is directly coated on both sides of the solid electrolyte, to which porous conductive sheets are thermal compression-bonded (hot pressed) to manufacture an MEA of 5-layer structure.
(2) Porous conductive sheet coating method : wherein the catalyst paste is coated on the surface of the porous conductive sheet to form a catalyst layer, followed by thermal compression-bonding (hot pressing) with the solid electrolyte to manufacture an MEA of 5-layer structure. This method is the same as the above-described (1) except that the type of support to be coated is not identical.
(3) Decal method : wherein the catalyst paste is coated on a support (such as a polytetrafluoroethylene (PTFE) sheet) to form a catalyst layer, followed by theremal compression-bonding (hot pressing) to transfer the catalyst layer alone to the solid electrolyte to form a 3-layer MEA, to which a porous conductive sheet is pressure-bonded to manufacture an MEA of 5-layer structure.
(4) Later catalyst carrying method : wherein an ink, in which a carbon substance not carrying a platinum powder has been mixed with a proton conductive substance, is coated on a solid electrolyte to form a film, and then the catalyst layer is formed by impregnating platinum ions into the solid electrolyte and reducing the ion to precipitate a platinum powder in the film.

The above-described hot press is preferably carried out under following conditions.
The solid electrolyte may be of a proton type having a sulfonic acid as a substituent, or of a salt type having a salt of sulfonic acid as described in JP-A-2004-165096 and JP-A-2005-190702. The counter cation of a salt type sulfonic acid is preferably a mono- or di-valent cation, and more preferably a monovalent cation. Specifically, lithium, sodium, potassium or magnesium is preferable. Further, plural types may be employed from the group consisting of these cations and a proton.
In the present invention, good adhesion can be retained even by setting the hot press temperature to not more than 200 °C.

When the above-described salt is used, in addition, the following process is necessary.
In order to use it for a fuel cell, the solid electrolyte must have proton conductivity For the purpose, by contacting the solid electrolyte with an acid, a salt substitution percentage thereof is reduced to 99% or less of that before the contact. Contact with an acid after contacting the electrode catalyst and the polymer electrolyte film can recover lowering in moisture content and ion conductivity of the film caused by thermal history that is given during the electrode contacting.

As a method for contacting the membrane and electrode assembly with an acid, a known immersion method with an acidic aqueous solution of hydrochloric acid, sulfuric acid, nitric acid, organic sulfonic acid or the like or a known spraying method with the acidic aqueous solution can be used. The immersion method is preferable because of its convenience. Further, it is preferable to use hydrochloric acid, sulfuric acid or nitric acid as mineral acids in the method. Although the concentration of the acidic aqueous solution used depends upon a declined state of the ion conductivity, an immersion temperature, an immersion time, etc., a 0.0001 to 5N acidic aqueous solution can be favorably used, for example, and a range of 0.1 to 2N is particularly preferable. Sufficient conversion is possible in many cases, if the immersion temperature is room temperature. In order to shorten the immersion time, the acidic aqueous solution may be warmed. In this case, a range of 30 to 100 °C is preferable, and a range of 50 to 95 °C is more preferable. Although the immersion time period depends on the concentration of the acidic aqueous solution and the immersion temperature, the immersion can be favorably performed for a range of around 10 minutes to 24 hours. Among the above range, not more than 6 hours is preferable, and not more than 4 hours is particularly preferable from the standpoint of productivity. The content of impurities in this acidic aqueous solution is preferably not more than 1wt%, and still more preferably not more than 0.1wt%.

Such method may be also employed that a proton moving in the inside of the film functions as an acid upon operating a fuel cell to wash out a substituted cation, thereby allowing the film to exert a higher ion conductivity. A method for producing a fuel cell by using the MEA thus produced will be described.

A polymer electrolyte membrane fuel cell is constructed by stacking plural unit cells, via cooling plates or the like, which unit cells each have a fuel flow distributing plate and an oxidant flow distributing plate, disposed on outer sides of the above-formed electrolyte membrane and electrode assembly, as current collectors provided with grooves to form fuel flow passages and oxidant flow passages, respectively. Among them, the current collector (bipolar plate) is a current collector made of graphite or a metal and also functioning as a flow passage-forming member having gas flow passages at a surface. The stack of the fuel cell can be produced by inserting the electrolyte membrane and gas-diffusing electrode assembly between the current collectors and stacking a plurality of such assemblies.

Since the voltage of a single cell of the fuel cell is generally not more than 1.2V, the fuel cell is used such that the unit cells are stacked in series to meet a voltage required by a load. As the stacking method, use is made of "plane stacking" in which the unit cells are stacked in plane or "bipolar stacking" in which the unit cells are stacked via separators each having fuel flow passages formed at opposite sides. Since the former has the cathode electrodes (air pole) exposed to the surface, it easily takes in air and can be made thin, so that the former one is suitable as a small-size fuel cell. Besides them, a stacking method in which silicon wafers are finely worked by using a MEMS technology and are stacked is also proposed.

A higher operating temperature of a fuel cell is preferable, because catalyst activity enhances. But, ordinarily, the fuel cell is operated at 50°C to 120°C, at which water content is easily controlled. Although a higher supply pressure of oxygen and hydrogen may be preferable because a fuel cell output increases, since probability of their contact through film breakage or the like also increases, the pressure is preferably controlled within a suitable range such as 1to 3 atmospheric pressures.

Examples of material that can be used as the fuel for a fuel cell employing the solid electrolyte of the invention include, as anode fuel, hydrogen, alcohols (methanol, isopropanol, ethylene glycol etc.), ethers (dimethylether, dimethoxymethane, trimethoxymethane etc.), formic acid, boron hydride complexes, ascorbic acid and the like. As cathode fuel, oxygen (including oxygen in air), hydrogen peroxide and the like.

There are 2 ways to supply the aforementioned anode fuel and cathode fuel to respective catalyst layers, that is, (1) a method in which they are subjected to controlled circulation using an auxiliary machine such as a pump (active type), and (2) a method in which no auxiliary machine is used (passive type, in which, for example, liquid fuel is supplied by capillary action or free fall; and gas fuel is supplied by exposing a catalyst layer to air). Combination of these is also possible. The former has such advantage that a high output may be achieved by carrying out pressurized humidity conditioning of reaction gasses, but has such disadvantage that miniaturization is difficult. The latter has an advantage of possibility of miniaturization, but has a disadvantage of difficulty in generating a high output.

Various applications have been discussed about a fuel cell, including automobile use, household use and portable device use and the like. In particular, the hydrogen type fuel cell is expected as an energy source for various hot water-supplying and power generating apparatuses for home use, source of power for transport apparatuses, and an energy source for portable electronic devices, while utilizing the advantage of generating a high output. For example, the hot water-supplying and power generating apparatus to which it can be preferably applied includes home-use, collective housing-use and hospital-use apparatuses; the transport apparatus includes the automobile and marine vessel; and the portable device includes the cellular phone, mobile notebook computer and electronic still camera and the like. Examples of the suitably applicable portable device include a portable generator, outdoor lighting device and the like. In addition, it can preferably be used as a power source of a robot for industrial use or household use, or other toys. Furthermore, it is useful as a power source for charging a secondary battery mounted on these devices. In addition, an application as an emergency power source is also proposed.

### EXAMPLES

The present invention will be described more specifically below based on Examples. The material, use amount, percentage, treatment content, treatment procedure and the like represented in Examples below can be arbitrarily changed as long as the change results in no deviation from the intent of the invention. Accordingly, the scope of the invention is not restricted to the specific examples represented below.

### <<Production of electrolyte>>

### P-1

After the interior of a four-neck, 500-ml round flask to which a stirrer, a thermometer and a potassium chloride tube were connected and which was equipped with a reflux condenser was replaced by nitrogen, 21.6g of a polysulfone (PSU) UDEL P-1700 manufactured by Solvay Advanced Polymers, LLC., 13.6g (0.1mol) of butane sultone and 50ml of dried nitrobenzene were charged thereinto. Under stirring, 4.7g (0.11mol) of anhydrous aluminum chloride was added in about 30 minutes. After the addition of the anhydrous aluminum chloride, reflux was performed for 8 hours. Then, a reaction product was poured into 500ml of ice water added with 25ml of conc. hydrochloric acid to stop the reaction. Sulfobutylated polysulfone was precipitated by slowly adding dropwise the reaction solution to 1 liter of deionized water, and collected by filtration. The deposited precipitate was repeatedly subjected to washing with deionized water by a mixer and a collecting operation by suction filtration until the filtrate became neutral. Then, the resultant was dried at 120 °C under reduced pressure overnight.
The equivalent weight of ion-exchangeable groups of the obtained sulfobutylated polysulfone was 980g/mol.

### P-2

The polysulfonated sulfone electrolyte was obtained by the same method as that of the solid electrolyte in JP-A-2006-344578, Example 3.

### P-3

Chloromethylmethyl ether (ClCH₂OCH₃), 18.75my (2.49 x 10⁻¹mol), added with 0.15ml (1.25 x 10⁻³mol) of SnCl₄, was put into a solution in which 11g (3.9 x 10⁻⁴mol) of (PSU) UDEL P-1700 was dissolved in 200ml of 1,1,2,2-tetrachloroethane (at about 60 °C). This solution was placed into a 500ml three-neck flask, which was equipped with a water-cooled tube and replaced by nitrogen, and the solution was reacted at 110 °C for 3 hours under stirring.
Thereafter, 3ml of methanol (MeOH) was added to stop the reaction, a polymer was precipitated by adding a large amount of MeOH after cooling, and the resultant was divided into a precipitate and a filtrate by suction filtration. Much MeOH was added again to the precipitate for washing.
By drying the precipitate under vacuum, 9.3 g of intended chloromethylated polysulfone was obtained.
After 4.6g (4.1 x 10⁻²mol) of potassium-tert-butoxide((CH₃)₃COK)) and 6.6g (3.7 x 10⁻²mol) of 3-mercapto-1-propane sodium sulfonate (HS-(CH₂)₃-SO₃Na) were placed in a 500-ml three-neck flask, and 100ml of dehydrated dimethylformamide (DMF) was added thereto. The solution was stirred at 80 °C for 10 minutes under nitrogen stream.
A solution of 5g of the above-synthesized chloromethylated polysulfone in 100ml of dehydrated DMF was added dropwise into the three-neck flask containing the solution prepared above. The flask was equipped with a water-cooled tube, and the solution was reacted at 86 °C under nitrogen stream for 5 hours. After cooling, the deposited precipitate was filtered, and 200ml of distilled water was added thereto, which was stirred at room temperature for 2 hours. The precipitate was filtered and dried, thereby obtaining 4.8g of an intended polymer into which sulfonic acid groups were introduced.

### <<Production of membranes>>

Each of the above P-1, P-2 and P-3 was dissolved into N-methylpyrolidone solvent to give 10wt% concentration. This solution was spread on a glass by spin coating, dried in air, and dried at 80 °C under vacuum, thereby forming electrolyte membranes M-1, M-2 and M-3 having a thickness of 50µm.

### <<Surface graft polymerization>>

At room temperature under a nitrogen gas atmosphere containing not more than 30ppm oxygen, a beam of electrons was irradiated on one face of a sample prepared by cutting each of the above-obtained electrolyte membranes M-1, M-2 and M-3 in a square of 5cm and a sample prepared by cutting a commercially available Nafion 112 in a square of 5cm (hereinafter referred to as N-1) (Acceleration voltage 10kV, irradiation dose 5kGy). Further, a beam of electrons was irradiated on the opposite face in the same manner.

After the oxygen used in the above operations was removed by repeatedly degassing and nitrogen-replacing at five times, a styrene solution containing divinylbenzene as a hydrocarbon monomer (40 parts by mass of styrene, 2 parts by mass of divinylbenzene and 40 parts by mass of n-hexane was introduced, under the atmosphere replaced with nitrogen gas, into a separable glass flask containing the above electrolyte membranes (M-1, M-2, M-3 and N-1) of which opposite surfaces were irradiated with the electron beams until the membranes were immersed into the solution. The electrolyte membranes were surface grafted by a reaction at 60 °C for 15 hours. Thereafter, the membranes were took outside, washed with toluene, acetone, and distilled water, and dried. Thereby, electrolyte membranes having opposite surfaces grafted were obtained.

Subsequently, the membranes having the surfaces grafted as above were reacted with chlorosulfonic acid in 1,2-dichloroethane solvent at 50 °C for 2 hours. The obtained membranes were washed with 1,2-dichloroethane, and deionized water, and dried, thereby obtaining electrolyte membranes (M-1s, M-2s, M-3s and N-1s) having the opposite surfaces to which the ion-exchangeable polymer was surface graft polymerized.

A beam of electrons was irradiated on both surfaces of electrolyte membranes (M-1, M-2, M-3 and N-1 each in a square of 5cm) under a nitrogen gas atmosphere containing not more than 30ppm oxygen at room temperature (Acceleration voltage 10kV, irradiation dose 10kGy).
After the irradiation, the above oxygen was removed by the degassing operations at five times, the electrolyte membranes were immersed in a solution containing fluorocarbon monomer CF₂=CFOCF₂CF(CF₃)O(CF₂)₂SO₂F (30 parts by mass of CF₂=CFOCF₂CF(CF₃)O(CF₂)₂SO₂F, 30 parts by mass of hexafluoromethaxylene and 0.01 parts by mass of azobisisobutylonitrole) in a nitrogen atmosphere replaced with nitrogen, which was subjected to a reaction at 60 °C for 24 hours. Thereafter, SO₂F groups were hydrolyzed by an ordinary method, thereby obtaining electrolyte membranes (M-1f. M-2f and M-3f) having the ion-exchangeable fluoropolymer surface graft polymerized to opposite faces.

### <<Production of catalyst layer>>

After 2g of platinum-carried carbon (Vulcan XC72 to which 30 mass% of platinum was carried) and 0.4g of powdery polytetrafluoroethylene were mixed, 40ml of a solution of Nafion (registered trademark) (manufactured by Aldrich Corporation, 5wt% solution) was added, and the mixture was dispersed in an ultrasonic dispersing device for 30 minutes, thereby preparing a paste for a catalyst layer. The obtained paste for the catalyst layer was coated on a reinforcing material-containing support (polytetrafluoroethylene film, manufactured by Saint-Gobain KK), which was punched in a given size after being dried, thereby preparing a catalyst layer. The coated amount was about 0.2mg/cm² in terms of the carried amount of platinum.

### <<Production of membrane and electrode assemblies>>

The catalyst layers as obtained above were bonded to both surfaces of each of the commercially available Nafion112, the M-1, the M-2 and the M-3 produced above and the M-1s, the M-2s, the M-3s, the N-1s, the M-1f, the M-2f and the M-3f subjected to the surface graft treatment, such that the catalyst-provided side contacted the electrolyte membrane. The resultants were thermally press bonded at temperatures given in Table 1 under 1.5MPa for 5 minutes, the temperature was lowered, while the applied pressure was kept, and then the reinforcing material-containing supports were released. In order to convert the salt in the electrolyte membranes to protons, the resultants were immersed in 0.5M sulfuric acid at room temperature for 24 hours, washed with water, and left to be spontaneously dried, thereby obtaining membrane and electrode assemblies. Results were shown in Table 1.

### <<Evaluation of adhesion of catalyst layers>>

### Tape-releasing test conditions

Scotch TM tape (manufactured by 3M, Type: Maintaining tape 810) was bonded to the surface of the catalyst layer of the membrane and electrode assembly produced above, and the resultant was pulled with a force of 500g at an angle of 45° relative to the tape bonded face. A case where the catalyst layer was not peeled from the membrane and electrode assembly was taken as ○, a case where a peeled area was less than 10% was taken as Δ, and a case where a peeled area was not less than 10% was taken as x. Results were shown in Table 1.

**[Table 1]**

| Sample | Electrolyte membrane | thermal press bonding temperature | Coloration phenomenon | Adhesion | Remarks |
|---|---|---|---|---|---|
| 101 | M-1s | 180°C | non-colored | ○ | Example |
| 102 | M-2s | 180°C | non-colored | ○ | Example |
| 103 | M-3s | 180°C | non-colored | ○ | Example |
| 104 | N-1s | 780°C | non-colored | ○ | Example |
| 105 | M-1f | 160°C | non-colored | ○ | Example |
| 106 | M-2f | 160°C | non-colored | ○ | Example |
| 107 | M-3f | 160°C | non-colored | ○ | Example |
| 108 | M-1 | 180°C | non-colored | × | Comparative example |
| 109 | M-2 | 1880°C | non-colored | × | Comparative example |
| 110 | M-3 | 180°C | non-colored | × | Comparative example |
| 111 | N-1 | 180°C | non-coiored | △ | Comparative example |
| 112 | M-1 | 210°C | colored | △ | Comparative example |
| 113 | M-2 | 210°C | colored | △ | Comparative example |
| 114 | M-3 | 210°C | colored | △ | Comparative example |

As mentioned above, good adhesion was obtained in the membrane and electrode assemblies of the present invention, even when the thermal press bonding temperature was low. To the contrary, in the case of the membrane and electrode assemblies as Comparative Examples, when the press bonding temperatures was low (210 °C), the adhesion was slightly improved, but the membranes were unfavorably colored and degraded. On the other hand, when the thermal press bonding temperature was decreased, the adhesion becomes worse.

### <<Characteristics of fuel cell>>

### (1) Maximum output and output in high current density area

A gas diffusion electrode (electroconductive layer) made of E-TEK and cut in the same size as that of the electrode was laminated upon the membrane and electrode assembly obtained above, which was set in a standard fuel cell-testing cell manufactured by ElectroChem, Inc., and the testing cell was connected to a fuel cell evaluation system (manufactured by NF corporation, As-510). Wetted hydrogen gas and wetted simulated air were flown on an anode electrode side and a cathode electrode side, respectively, and operation was continued until the voltage was stabilized. Thereafter, a load was put between the anode electrode and the cathode electrode, and current-voltage characteristics were recorded. Outputs were measured under the conditions that in each of the samples, the temperature inside the cell was 70 °C, the relative humidity inside the cell was 95%, the feed back pressure of the hydrogen gas was 2atms, and the feed back pressure of the simulated air gas was 2atms. The output voltages (V) at 0.3A/cM² were shown in Table 2.

### (2) Durability Test

As to the durability test, changes in output at a constant current density of 0.3A/cm² were observed under the conditions that wetted hydrogen gas and simulated air were flown on the anode electrode side and the cathode electrode side in given amounts, respectively, the relative humidity at the gas feed/exhaust openings on the anode electrode side and the cathode electrode side was 95%, and the cell temperature was 70 °C. The time when reduction in output by 10% was observed relative to the output value before the start of the continuous test was shown in Table 2, provided that the time when the Nafion12 (N-1) was used as the electrolyte membrane was taken as 1.0 (standard).

**[Table 2]**

| Sample | Electrolyte membrane | Output at 0.3A | Durability Reduction in output | Remarks |
|---|---|---|---|---|
| 101 | M-1s | 0.62 | 1.2 | Example |
| 102 | M-2s | 0. 58 | 1.1 | Example |
| 103 | M-3s | 0.65 | 1.2 | Example |
| 104 | N-1s | 0.58 | 1.1 | Example |
| 105 | M-1f | 0.65 | 1.5 | Example |
| 106 | M-2f | 0.68 | 1.6 | Example |
| 107 | M-3f | 0.67 | 1.4 | Example |
| 108 | M-1 | 0.44 | 0.5 | Comparative example |
| 109 | M-2 | 0.40 | 0.4 | Comparative example |
| 110 | M-3 | 0.42 | 0.5 | Comparative example |
| 111 | N-1 | 0.53 | 1.0 | Comparative example |

### (Evaluation method of surface graft polymerization)

Whether the graft polymerization occurred or not can be confirmed by measuring an abundance of an element peculiar to the graft polymerized polymer by a photoelectron spectroscopy (XPS). Further, the etching time period is converted to the thickness based on the following measurement results of a standard sample.

### (Production of standard sample)

A solution of Nafion (registered trademark) (manufactured by Aldrich Corporation, 20wt% solution), 40ml, was dispersed in an ultrasonic wave dispersing device for 30 minutes. The was coated on a cellulose ester film (FUJITAC, manufactured by FUJI PHOTO FILM Co., LTD) by using a rod bar such that the thickness of the dried membrane might be about 0.2µm, followed by drying. This thickness was measured as t (µm) again by using a film thickness meter.

### (Conversion of etching time to measured depth)

A standard sample was etched in argon gas at a pressure of 5 x 10⁻⁴Pa under an acceleration voltage of 2kV and an acceleration current of 20mA by using a photoelectron spectrometer (manufactured by Shimadzu Corporation, ESCA750). Etching is carried out for 1 minute, and an F1s signal of the F element is measured. This is repeated, and when the total time until a measured intensity of the signal of the F element becomes 1/10 of the intensity of the signal after the first etching is taken as T minutes, the etching speed is determined by t(µm)/T(minute), and an etching time of an actual sample is converted to the thickness.

### (Evaluation of the surface graft polymerization at surfaces of actual samples)

A graft polymerization thickness of a sample obtained by graft polymerization is evaluated by an XPS measurement, while it is being etched in the same conditions as those of the standard sample. As to an element to be detected on the XPS measurement, the F1s signal of the F element contained in the graft polymerized polymer is noted. Etching is carried out at one-minute interval, and the XPS is measured. The depth (which is obtained by conversion from the total etching time)at the time when the measured intensity of the signal of the specific element becomes not more than 1/10 of the intensity of the signal of the specific element after the first etching is taken as the graft polymerized thickness.

With respect to the electrolyte membranes M-1f, M-2f and M-3f to which the ion-exchangeable fluoropolymer was surface graft polymerized, whether the surface graft polymerization occurred or not was confirmed according to the above method. With respect to all the surfaces of the electrolyte membranes M-1f, M-2f and M-3f, the F elements originated from the fluoropolymer surface graft polymerized were detected. It was confirmed that the surface graft polymerized thicknesses as calculated from the etching times were 200nm to 300nm.

### Industrial applicability

The membrane and electrode assembly according to the present invention can be used for the polymer electrolyte membrane fuel cell. Further, this fuel cell can be utilized in the cogeneration system, the fuel cell vehicle, etc.

## Claims

1. A membrane and electrode assembly comprising an electrolyte membrane and an electrode comprising a catalyst layer on at least one surface of the electrolyte membrane, wherein the electrolyte membrane contacts the catalyst layer via an ion-exchangeable polymer obtained by subjecting polymerizable monomers to surface graft polymerization.

2. A membrane and electrode assembly comprising an electrolyte membrane and an electrode comprising a catalyst layer on at least one surface of the electrolyte membrane, wherein the electrolyte membrane contacts the catalyst layer via a surface graft polymerization layer comprising an ion-exchangeable polymer obtained by subjecting polymerizable monomers to surface graft polymerization.

3. The membrane and electrode assembly according to Claim 1 or 2, wherein the polymerizable monomer is an ion-exchangeable monomer.

4. The membrane and electrode assembly according to any one of Claims 1 to 3, wherein the catalyst layer contains a binder having the same structure as the ion-exchangeable polymer.

5. The membrane and electrode assembly according to any one of Claims 1 to 4, wherein the electrolyte membrane comprises an aromatic hydrocarbons polymer and the ion-exchangeable polymer is a fluorinated polymer.

6. The membrane and electrode assembly according to any one of Claims 2 to 5, wherein the surface graft polymerization layer has a thickness of 0.1 µm to 1.0 µm.

7. The membrane and electrode assembly according to any one of Claims 1 to 6, wherein the surface graft polymerization is carried out by low energy electron beam with an acceleration voltage of not more than 50KV, oxygen gas plasma, argon gas plasma, or ultraviolet ray.

8. A fuel cell comprising the membrane and electrode assembly according to any one of Claims 1 to 7.

9. A method for producing a membrane and electrode assembly, comprising subjecting polymerizable monomers to surface graft polymerization on an electrolyte membrane and forming a catalyst layer thereon.
